# EUROPEAN PATENT SPECIFICATION

(11) **EP 1 702 809 B1**
(45) Date of publication and mention of the grant of the patent: **05.01.2011**
(21) Application number: 06003708.2
(22) Date of filing: 23.02.2006
(51) Int. Cl.: B60R 21/01

(54) **Collision detecting apparatus for vehicle**
Kollisionsdetektionsgerät für Kraftfahrzeuge
Dispositif de détection de collision pour véhicules

(30) Priority: 15.03.2005 JP 2005074125
(43) Date of publication of application: 20.09.2006
(73) Proprietor: DENSO CORPORATION, Kariya-city, Aichi-pref., 448-8661 (JP); Hitachi Cable, Ltd., Tokyo 100-8166 (JP)
(72) Inventor: Ohtaka, Koji c/o Denso Corporation, Kariya-city Aichi-pref. 448-8661 (JP); Kobayashi, Shigenori c/o Denso Corporation, Kariya-city Aichi-pref. 448-8661 (JP); Iyoda, Motomi c/o Toyota Jidosha Kabushiki Kaisha, Toyota-city Aichi-pref. 471-8571 (JP); Nakagawa, Yukio c/o Toyota Jidosha K. K., Toyota-city Aichi-pref. 471-8571 (JP); Hishida, Yasuyuki c/o Hitachi Cable, Ltd., Chiyoda-ku Tokyo 100-8166 (JP); Kobayashi, Yoji c/o Hitachi Cable, Ltd., Chiyoda-ku Tokyo 100-8166 (JP); Saito, Takahiro c/o Hitachi Cable, Ltd., Chiyoda-ku Tokyo 100-8166 (JP)
(74) Representative: Kuhnen & Wacker

(56) References cited:
- WO-A-01/87673
- WO-A-2004/089699
- DE-A1- 10 340 243

## Description

The present invention relates to a collision detecting apparatus for vehicles, particularly, relates to an apparatus capable of adequately detecting a collision, such as a collision of a pedestrian, to a bumper.

According to a collision detecting apparatus disclosed in Japanese Unexamined Patent Publications No. JP-A-05-116592 and No. JP-A-07-190732, an optical fiber is disposed to extend around a front face of the vehicle and a decrease of light in the optical fiber due to a collision load of the vehicle is detected by an optical fiber sensor having a light leak property. Further, in JP-A-05-116592, the optical fiber sensor has a cylindrical collision load transmission member having projections therein for partly increasing deflection of the optical fiber by concentrating the external collision load to predetermined positions of the optical fiber. Furthermore, JP-A-05-116592 discloses to cover the optical fiber with an elastic member such as a rubber.

Moreover, WO- A1- 01/87673 discloses a vehicle intrusion detector which comprises a first optical guide system and a second optical guide system, said systems being separated by an intermediate gap with a width.

In a case that such a collision detecting apparatus is arranged between a bumper reinforcement member and a front bumper of the vehicle, it is effective to quickly detect a collision, such as a collision of a pedestrian, even if the collision occurs at any positions of the front bumper. The optical fiber sensor generally has an optical fiber unit including an optical fiber and a light transmitting and receiving circuit at least. The optical fiber is deformable by the collision load and therefore the amount of light transmitting in the optical fiber changes in accordance with the collision load. The light transmitting and receiving circuit introduces and receives the light into and from the optical fiber.

To improve collision load detecting sensitivity of the optical fiber sensor, the optical fiber unit is required to be effectively deformable in a range of an allowable deformation rate against the collision load input to the optical fiber sensor. The optical fiber unit is mechanically supported by a bumper reinforcement member in front of the bumper reinforcement member, thereby to avoid the optical fiber unit from entirely moving backward by the collision load from a front side.

In consideration of a width of the front bumper in a vertical direction and easy deformability of the front bumper, a load transmission plate is disposed between the front bumper and the optical fiber unit, for concentrating the collision load input to the front bumper to the optical fiber unit. In this case, the collision load input to the front bumper is concentrated to the load transmission plate, and then is transmitted to the bumper reinforcement member while deforming the optical fiber unit. Accordingly, the collision load input in the front bumper is effectively applied to the optical fiber unit.

In addition, the optical fiber of the optical fiber sensor is generally covered with an elastic member to be mechanically protected and to have recovery from a deformation due to a change of the collision load. Further, the optical fiber sensor generally has a stress concentrating plate for partly concentrating the collision load to respective portions of the optical fiber with respect to the right and left direction.

However, in this kind of vehicle collision detecting apparatus, a characteristic of the optical fiber unit, in particular, an optical characteristic and a mechanical characteristic of the optical fiber unit is likely to change with the change of temperature and deterioration over time. As a result, an output signal of the optical fiber sensor varies. Further, this is likely to influence detection accuracy of the apparatus.

In the optical fiber sensor in which the optical fiber covered with a rubber tube and the stress concentrating plate are embedded in a soft resin, an effect of the change of temperature will be considered as follows. For example, it is assumed that the optical fiber is made of methacrylate resin. First, the shape of the optical fiber, such as a diameter and a density, vary with the temperature change. Further, a coefficient of elasticity of the rubber tube changes, and a coefficient of elasticity of the soft resin changes. Furthermore, in an electronic circuit, the amount of light transmitted by a light transmitting circuit of the optical fiber sensor and the light receiving sensitivity of a light receiving circuit vary due to the temperature. In consideration of all of the above effects, the output signal of the optical fiber sensor has a significant variation against an equal collision load, before and after affected by the temperature change.

Similarly, the effect of deterioration over time will be considered as follows. First, the effect of deterioration over time is significant in the coefficient of elasticity of the rubber tube and the coefficient of elasticity of the soft resin. The sensitivity of the optical fiber (the amount of change of the output signal per a unit of collision load) changes with the change of the elasticity. In addition, the mount of light transmitted from the optical fiber sensor decreases with the deterioration over time, and hence the sensitivity of the optical fiber sensor varies. In consideration of all of these effects, the output signal of the optical fiber sensor has a significant variation against the input of the equal collision load, before and after the deterioration over time.

The change of characteristic of the optical fiber sensor due to the above described temperature change and deterioration over time will be described as below. The values of the output signals with respect to the input collision loads respectively change with the temperature change and the deterioration over time of the optical fiber sensor. The change of the output values is simply classified into a change of zero-point that is a value of the output signal when a non-collision load is input and a change of sensitivity that is measured by the amount of change of the output signal per a unit of the collision load.

In a general optical fiber sensor, the type of collision object is determined by comparing a signal voltage that is substantially proportional to the amount of light received in the light receiving circuit to a predetermined voltage as a threshold value. Therefore, the change of zero-point corresponds to the change of threshold voltage level. Accordingly, it is difficult to accurately detect the type of collision object, and hence is likely to cause a determination error.

The present invention is made in view of the foregoing problem, and it is an object of the present invention to provide a vehicle collision detecting apparatus capable of accurately determining a collision irrespective of the change of the zero-point of an optical fiber sensor due to the change of temperature and deterioration over time.

The vehicle collision detecting apparatus of the present invention has a first optical fiber sensor, a second optical fiber sensor and a circuit unit. The first optical fiber sensor has an optical fiber extending in a horizontal direction between a bumper and a bumper reinforcement member and a light transmitting and receiving circuit introducing light into the optical fiber and detecting light from the optical fiber. The second optical fiber sensor has an optical fiber extending in the horizontal direction at a position without receiving a collision load at a time of a collision. The circuit unit detects information relating to the collision load by using an output of the first optical fiber sensor and an output of the second optical fiber sensor.

Accordingly, the output of the second optical fiber is used in detecting the information relating to the collision load as a reference. Therefore, even if the zero-point of the first optical fiber sensor is changed with the temperature and deterioration over time, the collision can be accurately detected.

Other objects, features and advantages of the present invention will become more apparent from the following detailed description made with reference to the accompanying drawings, in which like parts are designated by like reference numbers and in which:
Fig. 1 is a schematic transparent plan view of a vehicle having a pedestrian collision sensor and a pedestrian protection apparatus according to an embodiment of the present invention;
Fig. 2 is an exploded perspective view of the pedestrian collision sensor with a front bumper according to the embodiment of the present invention;
Fig. 3 is a top view of the pedestrian collision sensor arranged at a front part of the vehicle for showing arrangement according to the embodiment of the present invention;
Fig. 4 is a schematic block circuit diagram of the pedestrian collision sensor according to the embodiment of the present invention;
Fig. 5A is a horizontal cross-sectional view of the fiber unit according to the embodiment of the present invention;
Fig. 5B is a vertical cross-sectional view of the fiber unit according to the embodiment of the present invention;
Fig. 6 is a perspective view of a stress concentrating plate according to the embodiment of the present invention; and
Fig. 7 is a cross-sectional view of a load transmission plate according to the embodiment of the present invention.

Hereafter, a preferred embodiment of the present invention will be described with reference to the drawings. In the embodiments, the collision detecting apparatus of the present invention is exemplary employed to a vehicle protection apparatus for detecting a collision of a pedestrian. The present invention is not limited to the following embodiments, but can be implemented by combinations of conventional structural elements.

### (General Structure)

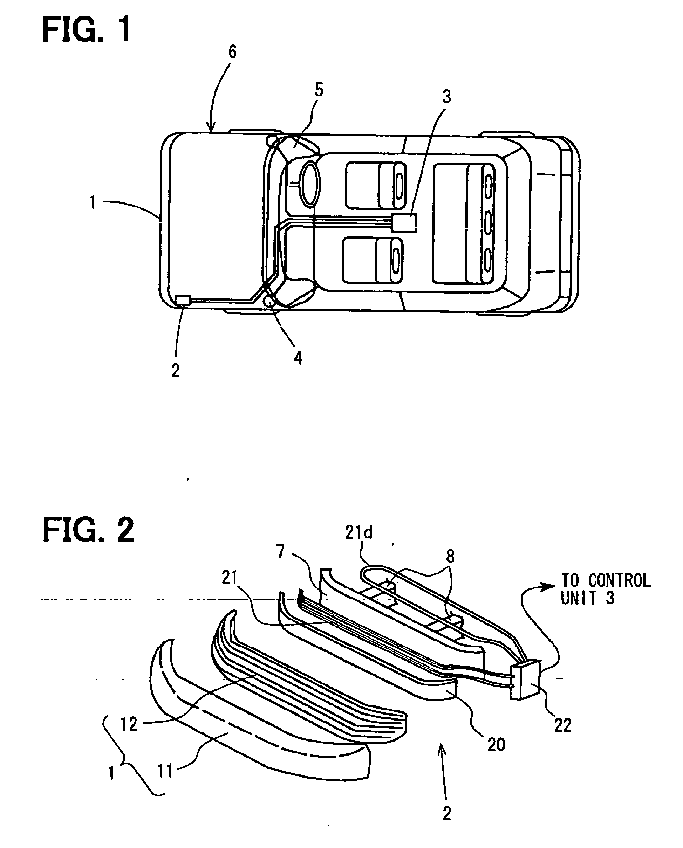

First, a general structure of the vehicle protection apparatus will be described with reference to Fig. 1. As shown in Fig. 1, the vehicle protection apparatus has the collision detecting apparatus (hereafter, referred to as pedestrian collision sensor) 2, a pedestrian protection control unit 3, a pillar air bag expansion device 4, and a pillar air bag 5 for protecting a pedestrian. In Fig. 1, numeral 1 denotes a front bumper, and numeral 6 denotes a vehicle body.

The pedestrian protection control unit 3, the pillar air bag expansion device 4 and the pillar air bag 5 construct an air bag-type pedestrian protection apparatus for protecting a pedestrian, in particular, a head of the pedestrian, who may fall over a bonnet at the time of a collision. In Fig. 1, the pedestrian collision sensor 2 is schematically illustrated.

### (Structure of Pedestrian Collision Sensor 2)

Next, the structure of the pedestrian collision sensor 2 will be described with reference to Figs. 2 to 4. The pedestrian collision sensor 2 includes a load transmission plate 20, a first optical fiber unit 21, a second optical fiber unit 21d, and a circuit part 22. The load transmission plate 20 and the first optical fiber unit 21 are disposed to extend in a right and left direction along a front surface of a bumper reinforcement member 7, between the front bumper 1 and the bumper reinforcement member 7. The front bumper 1 is constructed of a bumper cover 11 and a bumper absorber 12 that is located on a rear side of the bumper cover 11. The front bumper 1 is located at a front part of the vehicle body 6.

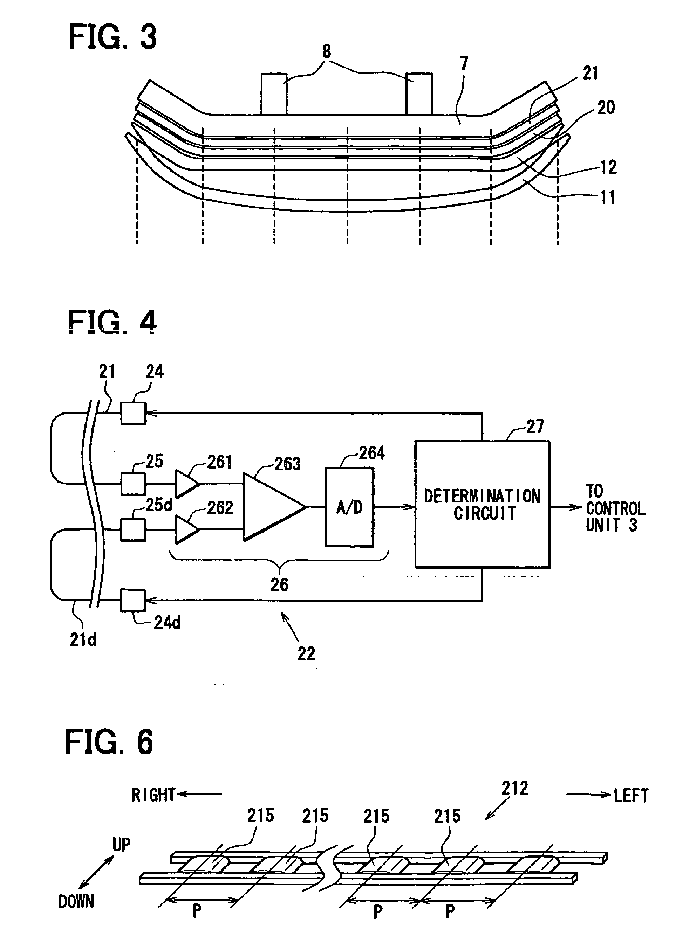

The second optical fiber unit 21d is disposed at a position without receiving a collision load, as a dummy. In Fig. 2, the second optical fiber unit 21 d is disposed to extend in a horizontal direction for example above side members 8 that are located at a rear side of the bumper reinforcement member 7. In Fig. 3, the second optical fiber unit 21d is not illustrated.

As a circuit structure, the pedestrian collision sensor 2 is constructed of the first optical fiber unit 21, a first light transmitting circuit 24, a first light receiving circuit 25, the second optical fiber unit 21 d, a second light transmitting circuit 24b, a second light receiving circuit 25d, a signal processing circuit 26, and a determination circuit 27, as shown in Fig. 4. The signal processing circuit 26 amplifies signals output from the first light receiving circuit 25 and the second light receiving circuit 25d. The signal processing circuit 26 then performs a subtraction between the outputs, and converts the subtracted signal into a digital signal.

The determination circuit 27 is constructed of a microcomputer that processes the digital signal through a predetermined pedestrian discriminate routine, thereby to determine a collision of a pedestrian. When it is determined that the pedestrian collided, the determination circuit 27 informs the pedestrian protection control unit 3 of the collision of the pedestrian. The pedestrian protection control unit 3 instructs the pillar air bag expansion device 4 to expand the pillar air bag 5 based on the information.

The circuit part 22 includes the first light transmitting circuit 24, the first light receiving circuit 25, the second light transmitting circuit 24d, the second light receiving circuit 25d, the signal processing circuit 26 and the determination circuit 27 therein. The circuit part 22 is arranged at a front left end of the vehicle, for example. The first optical fiber unit 21, the first light transmitting circuit 24, and the first light receiving circuit 25 construct a first optical fiber sensor. The second optical fiber unit 21d, and the second light transmitting circuit 24d and the second light receiving circuit 25d construct a second optical fiber sensor.

The first optical fiber unit 21 is disposed in a U-shape along the front surface of the bumper reinforcement member 7. Specifically, the first optical fiber unit 21 extends from the circuit part 22, and further extends from a left end to a right end of the bumper reinforcement member 7. At the right end of the bumper reinforcement member 7, the first optical fiber unit 21 turns downward and further extends to the left end of the bumper reinforcement member 7. Then, the first optical fiber unit 21 returns to the circuit part 22. The first optical fiber unit 21 has an optical fiber therein, and structure of the optical fiber will be described later. The light introduced from the first light transmitting circuit 24 passes through the optical fiber of the first optical fiber unit 21 and then photo-converted into the detection signal voltage in the first light receiving circuit 25.

The second optical fiber unit 21d is disposed in a U-shape above the side members 8. Specifically, the second optical fiber unit 21 d extends from the circuit part 22 and further extends from the left side to the right side of the vehicle, above the side members 8. Further, the second optical fiber unit 21 d turns at the right end and returns to the circuit part 22. The second optical fiber unit 21 d has a configuration similar to that of the first optical fiber unit 21d. That is, the structure, material and shape of the second optical fiber unit 21d are the same as those of the first optical fiber unit 21, and the configuration of the second optical fiber sensor 21d is not described in detail. The light introduced into the optical fiber of the second optical fiber unit 21d from the second light transmitting circuit 24d passes through the optical fiber and then is photo-converted into a detection signal voltage in the second light receiving circuit 25d. The second optical fiber unit 21d can be arranged above the bumper reinforcement member 7, instead of arranging above the side members 8.

The signal processing circuit 26 has a first preamplifier 261 for amplifying the detection signal voltage from the first light transmitting circuit 25, a second preamplifier 262 for amplifying the detection signal voltage from the second light receiving circuit 25d, a calculating circuit 263 for performing the subtraction between output voltages from the preamplifiers 261, 262, and an A/D converter 264 for converting an output voltage from the calculating circuit 263 into a digital signal. The determination circuit 27 determines an occurrence of the collision of a pedestrian based on the converted digital signal.

### (Structure of Optical Fiber Unit)

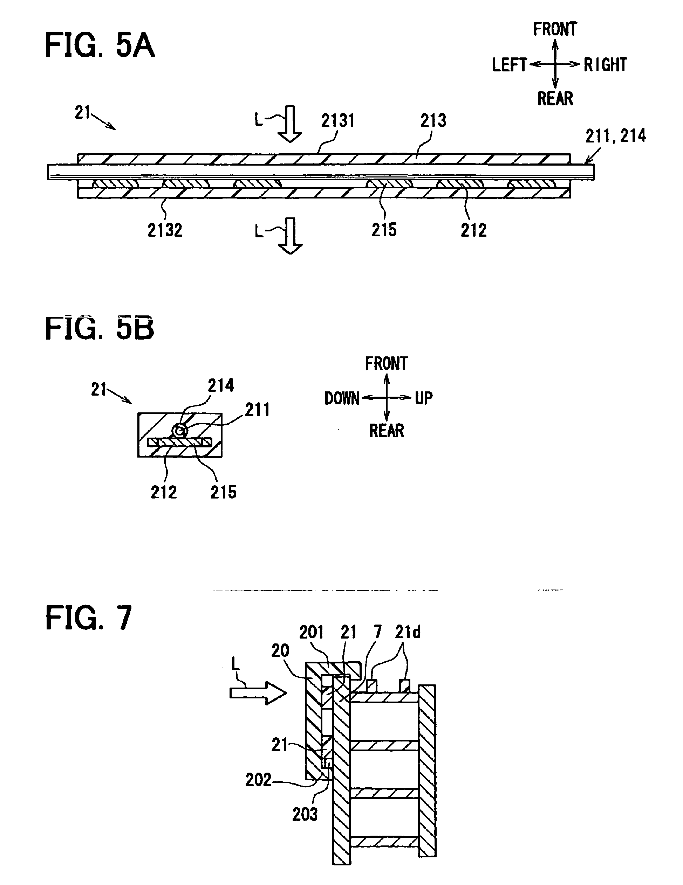

The structure of the first optical fiber unit 21 used in this embodiment will be described with reference to Figs. 5A and 5B. Fig. 5A shows a horizontal cross-section of the optical fiber unit 21 and Fig. 5B shows a vertical cross-section of the optical fiber unit 21. In Figs. 5A and 5B, front and rear, up and down, right and left arrows denote directions with respect to the vehicle when the illustrated parts are mounted on the vehicle. The second optical fiber unit 21 d has the structure similar to the structure of the first optical fiber unit 21.

The first optical fiber unit 21 has the optical fiber 211, a stress concentrating plate 212, a silicone resin body 213. The optical fiber 211 extends in the right and left direction of the vehicle. The stress concentrating plate 212 is disposed vertically and extends in the right and left direction closely behind the optical fiber 211. The silicone resin body 213 embeds the optical fiber 211 and the stress concentrating plate 212 therein. The silicone resin body 213 has a rectangular-shaped vertical cross-section. The optical fiber 211 is covered with a rubber tube 214.

The first optical fiber unit 21 is arranged such that a first wall 2131 of the silicone resin body 213 faces a rear surface of the load transmission plate 20 and a second wall 2132 of the silicone resin body 213 faces a front surface of the bumper reinforcement member 7. The second optical fiber unit 21 d is arranged at a position separate from the load transmission plate 20 without receiving a collision load L.

Alternatively, the first optical fiber unit 21 can be arranged such that the first wall 2131 of the silicone resin body 213 faces the front surface of the bumper reinforcement member 7 and the second wall 2132 of the silicone resin body 213 faces the rear surface of the load transmission plate 20. In addition, a second stress concentrating plate, which is similar to the stress concentrating plate 212, can be arranged on the opposite side as the stress concentrating plate 212, with respect to the optical fiber 211. In this case, it is preferable that vertical rungs 215 of the stress concentrating plate 212, which will be described later, and vertical rungs of the second stress concentrating plate are staggered in the right and left direction. Further, the stress concentrating plate 212 can be formed by molding of a hard resin.

### (Structure of Stress Concentrating Plate 212)

The stress concentrating plate 212 will be described with reference to a schematic perspective view of Fig. 6. The stress concentration plate 212 is formed by punching a thin longitudinal metal plate. The stress concentrating plate 212 has a shape for partly concentrating the collision load to predetermined positions of the optical fiber 211 with respect to the longitudinal direction of the optical fiber 211. For example, the stress concentrating plate 212 has a ladder shape including the plurality of vertical rungs (also referred to as raised portions) 215. The plurality of vertical rungs 215 is arranged at a predetermined pitch P in the right and left direction of the vehicle. Each of the vertical rungs 215 contacts an outer circumferential surface of the rubber tube 214 and extends in a vertical direction, as shown in Fig. 5.

### (Structure of Load Transmission Plate)

The shape of the load transmission plate 20 will be described with reference to Fig. 7. In the embodiment, the load transmission plate 20 is molded with resin. The load transmission plate 20 extends in the vertical direction and in the right and left direction, between the bumper absorber 12 and the optical fiber unit 21 for transmitting the collision load L from the front bumper 1 to the first optical fiber unit 21. In Fig. 7, the second optical fiber unit 21d is located on the bumper reinforcement member 7.

The first optical fiber unit 21 is located between the rear surface of the load transmission plate 20 and the front surface of the bumper reinforcement member 7, and extends in the horizontal direction while contacting an upper half of the front surface of the bumper reinforcement member 7. In the embodiment, the load transmission plate 20 is made of a resin plate having rigidity higher than that of the bumper cover 11.

The load transmission plate 20 has an eave portion 210 and a projection 202. The eave portion 210 extends from the upper end of the load transmission plate 20 in a rear direction. The projection 202 extends from the lower end of the load transmission plate 20 in the rear direction. The rear end of the eave portion 201 bends downward to form a stopper portion. From the front surface of the bumper reinforcement member 7, a projection 203 extends, at a position under the optical fiber unit 21 and above the projection 202. The bottom wall of the eave portion 201 contacts the top wall of the bumper reinforcement member 7.

In this structure, an upward movement of the load transmission plate 20 is prohibited because the projection 203 restricts an upward movement of the projection 202. Similarly, a downward movement of the load transmission plate 20 is prohibited because the top wall of the bumper reinforcement member 7 restricts a downward movement of the eave portion 201. Accordingly, vertical movement of the load transmission plate 20 due to vertical vibration of the vehicle body is restricted with respect to the bumper reinforcement member 7.

The load transmission plate 201 is disposed such that the eave portion 201 is movable in the front and rear direction while sliding along the top wall of the bumper reinforcement member 7. Therefore, the load transmission plate 20 can sufficiently transmit the collision load L to the first optical fiber unit 21.

In this case, if a length of the projection 202 in the rearward direction is short, the load transmission plate 20 is linearly movable in the rearward direction. If the length of the projection 202 in the rearward direction is long and the end of the projection 202 is in contact with the front surface of the bumper reinforcement member 7, the load transmission plate 20 rotates in a clockwise direction about the projection 202 as a rotation center.

In both cases, a deflection of the load transmission plate 20 due to the collision load L is reduced with the increase of the rigidity of the load transmission plate 20. By this, the collision load L can be applied throughout the longitudinal first optical fiber unit 21 while suppressing partial deformation of the first optical fiber unit 21.

### (Operation)

Hereafter, detecting operation of the above-described pedestrian collision sensor 2 will be described. When the collision load L is applied to the first optical fiber unit 21 in the front and rear direction, the collision load is partly transmitted to the optical fiber 211 through the vertical rungs 215 of the stress concentrating plate 212 because the silicone resin body 213 and the rubber tube 214 are easily elastically deformable.

Therefore, the optical fiber 211 is bent at positions corresponding to the vertical rungs 215 with positive correlation. Thus, the amount of light passing through the optical fiber 211 is decreased in accordance with the degree of the bents. Accordingly, in a case that a predetermined amount of light is transmitted to one end of the optical fiber 211 from the first light transmitting circuit 214, the amount of light transmitted to the first light receiving circuit 25 from the opposite end of the optical fiber 211 correlates to the collision load. With this, the output signal from the first light receiving circuit 25 changes with the collision load.

On the contrary, the second optical fiber 21d is located at the position without receiving the collision load L. Therefore, the output of the second optical fiber 21d normally has a value having no collision load. Since the second optical fiber sensor has the structure similar to that of the first optical fiber sensor, the first optical fiber sensor and the second optical fiber sensor have similar effects of the change of temperature and deterioration over time.

Therefore, it is considered that a zero-point shift (a change of an offset amount) of the first optical fiber sensor due to the change of temperature and deterioration over time is substantially the same as that of the second optical fiber sensor. Accordingly, the zero-point shift (offset change) of the two sensors can be cancelled each other by subtracting the outputs of two sensors, even if the sensors are affected by temperature and deteriorate over time.

The output from the calculating circuit 263 is compared to a predetermined threshold value in the determination circuit 27 after converted into the digital signal in the A/D converter 264. Also in the determination circuit 27, the collision of the pedestrian is determined in the determination circuit 27 based on the compared result. When the collision of the pedestrian is determined, the pedestrian protection control unit 3 instructs the pillar air bag expansion device 4 to expand the pillar air bag 5.

The determination of the pedestrian based on the collision load (subtraction output) can be made by using a map having multiple-threshold values. Also, the determination circuit 27 can be constructed of a hardware circuit such as a comparator. In this case, the A/D converter 264 can be omitted. Furthermore, a type of the collision object that generated the collision load L can be determined by comparing the output of the calculating circuit 263 to a predetermined threshold.

In the above-described embodiment, the calculating circuit 263 performs the subtraction between the output from the first optical fiber sensor and the output of the second optical fiber. However, the operation of the calculating circuit 263 is not limited to the subtraction. The output of the second optical fiber sensor is used as a reference of the zero-point shift. For example, the calculating circuit 263 may calculate a ratio of the output of the first optical fiber sensor to the output of the second optical fiber sensor as a reference of the zero-point shift.

Furthermore, the subtraction between the output of the first optical fiber sensor and the output of the second optical fiber sensor can be performed at different parts. For example, the output voltages of the light receiving circuits 25, 25d of the two optical fiber sensors can be subtracted in an analog subtraction circuit. Alternatively, the subtraction can be performed after the output voltages of the light receiving circuits 25, 25d of the two sensors are converted to digital signals.

In a case that the determination circuit 27 compares the signal voltage corresponding to the collision load to the predetermined threshold value voltage, the threshold value voltage can be changed by the output voltage of the second optical fiber sensor.

In the above-described embodiment, each of the first optical fiber sensor and the second optical fiber sensor has the light transmitting circuit 24, 24d and the light receiving circuit 25, 25d. Alternatively, the light transmitting circuit of one of the sensors can be shared with the other one of the sensors. In this case, the light is sequentially input to the first and second optical fiber units 21, 21 d from the single light transmitting circuit by using some light switching means. Instead, the light from the single light transmitting circuit is divided to the first and second optical fiber unit 21, 21 d by using a light dividing means.

Similarly, the light receiving circuit can be shared between the first and second optical fiber sensor. That is, the light from the first and second optical fiber units 21, 21d are received in a single light receiving circuit. In this case, the light is sequentially introduced into the first and second optical fiber units 21, 21 d.

In the above-described embodiment, the pedestrian collision sensor 2 is mounted at the front part of the vehicle. However, the sensor 2 can be arranged at a rear part of the vehicle to detect a collision or bump on the rear side of the vehicle.

The present invention will be summarized as follows. According to an aspect of the invention, information relating to the 10 detected by using the output of the first optical fiber sensor and the output of the second optical fiber sensor that has no collision load input. The zero-point shift of the first optical fiber sensor is compensated by using the output of the second optical fiber sensor. Therefore, the detection accuracy of the collision detecting apparatus improves, irrespective of the effect of temperature and deterioration over time.

Further, since the zero-point shift of the first optical fiber sensor is compensated by using the second optical fiber sensor, durability required to respective parts of the optical fiber sensors against the change of temperature and the deterioration over time is reduced. Therefore, it is possible to reduce the costs of material and parts. Further, it is possible to suppress the increase of manufacturing costs even if the second optical fiber is additionally used.

According to another aspect of the invention, the collision detecting circuit 27 determines the type of the collided object that generated the collision load by comparing the degree of the output of the calculating circuit to the predetermined threshold value voltage. Accordingly, it is possible to improve accuracy of determining the type of the collided object and to decrease erroneous determination due to the change of zero-point of the optical fiber sensor.

According to further another aspect of the invention, the collision detecting circuit 27 determines whether the collided object that generated the collision load is a pedestrian by comparing the degree of the output of the calculating circuit to the predetermined threshold value. Accordingly, it is possible to improve accuracy of determination of the collided object and to decrease erroneous determination due to the change of zero-point of the optical fiber sensor. Further, it is effective to reduce harm to the pedestrian. Here, the pedestrian is not limited to a person walking on a street, but includes any people, such as, a person riding a motorcycle and a bicycle.

Further, the optical fiber of the second optical fiber sensor is arranged horizontally above or on the rear side of the bumper reinforcement member 7. Because the arranging pattern of the second optical fiber unit 21 d is similar to that of the first optical fiber unit 21, the effect of temperature is generally the same between two optical fiber unit 21, 21d. Therefore, the effect of compensation of the zero-point improves. Also, the first optical fiber unit 21 and the second optical fiber unit 21d receive substantially the same effect of vibrations of the vehicle. Therefore, it is possible to suppress the change of zero-point by the vibrations.

## Claims

1. A collision detecting apparatus (2) for a vehicle, comprising;
a first optical fiber sensor having an optical fiber (21) disposed to extend in a horizontal direction between a bumper (1) and a bumper reinforcement member (7) of the vehicle and a light transmitting and receiving circuit (24, 25) introducing light into the optical fiber (211) and detecting light from the optical fiber (211);
a second optical fiber sensor having an optical fiber (21d) that is disposed at a position without receiving a collision load;
a circuit unit including a calculating circuit (263) and a collision detecting circuit (27), **characterized in that**
the calculating circuit (263) performs a subtraction between an output of the first optical fiber sensor and an output of the second optical fiber sensor, and
the collision detecting circuit (27) detects information relating to the collision load based on an output of the calculating circuit (263).

2. The collision detecting apparatus according to claim 1, wherein the collision detecting circuit (27) determines a type of object that generated the collision load by comparing the output of the calculating circuit (263) to a predetermined threshold.

3. The collision detecting apparatus according to claim 1 or 2, wherein the collision detecting circuit (27) determines whether an object that generated the collision load is a pedestrian by comparing the output of the calculating circuit (263) to a predetermined threshold.

4. The collision detecting apparatus according to any one of claims 1 through 3, wherein the optical fiber (21d) of the second optical fiber sensor is disposed to extend in the horizontal direction on a rear side of the bumper reinforcement member (7).

5. The collision detecting apparatus according to any one of claims 1 through 3, wherein the optical fiber (21d) of the second optical fiber sensor is disposed to extend in the horizontal direction above the bumper reinforcement member (7).

6. The collision detecting apparatus according to any one of claims 1 through 5, wherein the second optical fiber sensor has a light transmitting and receiving circuit (24d, 25d) for introducing light into the optical fiber (21d) of the second optical fiber sensor and detects light from the optical fiber (21 d) of the second optical fiber sensor.

## Patentansprüche

1. Kollisionsdetektionsvorrichtung (2) für ein Fahrzeug, aufweisend:
einen ersten Lichtwellenleitersensor mit einem Lichtwellenleiter (21), der so angeordnet ist, dass er sich in einer horizontalen Richtung zwischen einem Stoßfänger (1) und einem Stoßfängerverstärkungselement (7) des Fahrzeugs erstreckt, und einer Lichtübertragungs- und -empfangsschaltung (24, 25), die Licht in den Lichtwellenleiter (211) einführt und Licht von dem Lichtwellenleiter (211) detektiert;
einen zweiten Lichtwellenleitersensor mit einem Lichtwellenleiter (21d), der an einer Position angeordnet ist, ohne Kollisionskräfte aufzunehmen;
eine Schaltungseinheit, die eine Berechnungsschaltung (263) und Kollisionsdetektionseinheit (27) beinhaltet, **dadurch gekennzeichnet, dass**
die Berechnungsschaltung (263) eine Subtraktion zwischen einem Ausgangssignal des ersten Lichtwellenleiters und einem Ausgangssignal des zweiten Lichtwellenleiters ausführt, und
die Kollisionsdetektionsschaltung (27) Informationen bezüglich der Kollisionskraft basierend auf einem Ausgangssignal der Berechnungsschaltung (263) detektiert.

2. Kollisionsdetektionsvorrichtung nach Anspruch 1, wobei die Kollisionsdetektionsschaltung (27) eine Art eines Objekts bestimmt, durch das Kollisionskraft erzeugt wurde, indem das Ausgangssignal der Berechnungsschaltung (263) mit einem vorbestimmten Schwellwert verglichen wird.

3. Kollisionsdetektionsvorrichtung nach Anspruch 1 oder 2, wobei die Kollisionsdetektionsschaltung (27) bestimmt, ob es sich bei einem Objekt, durch das die Kollisionskraft erzeugt wurde, um einen Fußgänger handelt, indem das Ausgangssignal der Berechnungsschaltung (263) mit einem vorbestimmten Schwellwert verglichen wird.

4. Kollisionsdetektionsvorrichtung nach einem der Ansprüche 1 bis 3, wobei der Lichtwellenleiter (21 d) des zweiten Lichtwellenleitersensors so angeordnet ist, dass er sich in der horizontalen Richtung auf einer Rückseite des Stoßfängerverstärkungselements (7) erstreckt.

5. Kollisionsdetektionsvorrichtung nach einem der Ansprüche 1 bis 3, wobei der Lichtwellenleiter (21 d) des zweiten Lichtwellenleitersensors so angeordnet ist, dass er sich in der horizontalen Richtung über dem Stoßfängerverstärkungselement (7) erstreckt.

6. Kollisionsdetektionsvorrichtung nach einem der Ansprüche 1 bis 5, wobei der zweite Lichtwellenleitersensor eine Lichtübertragungs- und - empfangsschaltung (24d, 25d) zum Einführen von Licht in den Lichtwellenleiter (21 d) des zweiten Lichtwellenleiters aufweist und Licht von dem Lichtwellenleiter (21 d) des zweiten Lichtwellenleiters detektiert.

## Revendications

1. Appareil de détection de collision (2) pour un véhicule comprenant ;
un capteur à fibre optique ayant une fibre optique (21) disposée de manière à s'étendre dans une direction horizontale entre un pare-chocs (1) et un élément de renfort de pare-chocs (7) du véhicule et un circuit de réception et de transmission de lumière (24, 25) introduisant la lumière dans la fibre optique (211) et détectant la lumière provenant de la fibre optique (211) ;
un deuxième capteur à fibre optique ayant une fibre optique (21d) qui est disposée au niveau d'une position sans recevoir une charge de collision ;
une unité de circuit incluant un circuit de calcul (263) et un circuit de détection de collision (27), **caractérisé en ce que**
le circuit de calcul (263) réalise une soustraction entre une sortie du premier capteur à fibre optique et une sortie du deuxième capteur à fibre optique, et
le circuit de détection de collision (27) détecte des informations se rapportant à la charge de collision sur la base d'une sortie du circuit de calcul (263).

2. Appareil de détection de collision selon la revendication 1, dans lequel le circuit de détection de collision (27) détermine un type d'objet qui a généré la charge de collision en comparant la sortie du circuit de calcul (263) à un seuil prédéterminé.

3. Appareil de détection de collision selon la revendication 1 ou 2, dans lequel le circuit de détection de collision (27) détermine si un objet qui a généré la charge de collision est un piéton en comparant la sortie du circuit de calcul (263) à un seuil prédéterminé.

4. Appareil de détection de collision selon l'une quelconque des revendications 1 à 3, dans lequel la fibre optique (21d) du deuxième capteur à fibre optique est disposée de manière à s'étendre dans une direction horizontale sur le côté arrière de l'élément de renfort de pare-chocs (7).

5. Appareil de détection de collision selon l'une quelconque des revendications 1 à 3, dans lequel la fibre optique (21d) du deuxième capteur à fibre optique est disposée de manière à s'étendre dans une direction horizontale au dessus de l'élément de renfort de pare-chocs (7).

6. Appareil de détection de collision selon l'une quelconque des revendications 1 à 5, dans lequel le deuxième capteur à fibre optique a un circuit de réception et de transmission de lumière (24d, 25d) pour introduire la lumière dans la fibre optique (21d) du deuxième capteur à fibre optique et détecte la lumière provenant de la fibre optique (21d) du deuxième capteur à fibre optique.
